(19) Europäisches Patentamt
European Patent Office
Office européen des brevets

(11) **EP 2 449 484 B1**

(12) **EUROPEAN PATENT SPECIFICATION**

(45) Date of publication and mention
of the grant of the patent:
**09.01.2019 Bulletin 2019/02**

(51) Int Cl.:
**G06F 17/30** (2006.01)

(21) Application number: **10734313.9**

(22) Date of filing: **23.06.2010**

(86) International application number:
**PCT/IB2010/052845**

(87) International publication number:
**WO 2011/001331 (06.01.2011 Gazette 2011/01)**

(54) **RELEVANCE FEEDBACK FOR CONTENT-BASED IMAGE RETRIEVAL**

RELEVANZ-FEEDBACK FÜR INHALTSBASIERTEN BILDABRUF

RÉTROACTION DE PERTINENCE POUR EXTRACTION D'IMAGES SUR LA BASE DE LEUR CONTENU

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **30.06.2009 EP 09164122**

(43) Date of publication of application:
**09.05.2012 Bulletin 2012/19**

(73) Proprietor: **Koninklijke Philips N.V.**
**5656 AE Eindhoven (NL)**

(72) Inventors:
 • **AKGÜL, Ceyhun, Burak**
  **NL-5656 AE Eindhoven (NL)**
 • **EKIN, Ahmet**
  **NL-5656 AE Eindhoven (NL)**

(74) Representative: **van Velzen, Maaike Mathilde et al**
**Philips Intellectual Property & Standards**
**High Tech Campus 5**
**5656 AE Eindhoven (NL)**

(56) References cited:
**US-A1- 2007 288 432**

 • **HAIYING GUAN ET AL: "Bridging the semantic gap using Ranking SVM for image retrieval"** BIOMEDICAL IMAGING: FROM NANO TO MACRO, 2009. ISBI '09. IEEE INTERNATIONAL SYMPOSIUM ON, IEEE, PISCATAWAY, NJ, USA, 28 June 2009 (2009-06-28), pages 354-357, XP031502049 ISBN: 978-1-4244-3931-7
 • **RAHMAN MD M ET AL: "A unified image retrieval framework on local visual and semantic concept-based feature spaces"** JOURNAL OF VISUAL COMMUNICATION AND IMAGE REPRESENTATION, ACADEMIC PRESS, INC, US LNKD- DOI:10.1016/J.JVCIR.2009.06.001, vol. 20, no. 7, 10 June 2009 (2009-06-10), pages 450-462, XP026467879 ISSN: 1047-3203 [retrieved on 2009-06-10]
 • **MULLER H ET AL: "A review of content-based image retrieval systems in medical applications-clinical benefits and future directions"** INTERNATIONAL JOURNAL OF MEDICAL INFORMATICS, ELSEVIER SCIENTIFIC PUBLISHERS, SHANNON, IR LNKD- DOI:10.1016/J.IJMEDINF.2003.11.024, vol. 73, no. 1, 1 February 2004 (2004-02-01), pages 1-23, XP004492601 ISSN: 1386-5056
 • **SHARATH R CHOLLETI ET AL: "MI-Winnow: A New Multiple-Instance Learning Algorithm"** TOOLS WITH ARTIFICIAL INTELLIGENCE, 18TH IEEE INTERNATIONAL CONFERENCE ON, IEEE, PI, 1 November 2006 (2006-11-01), pages 336-346, XP031031458 ISBN: 978-0-7695-2728-4

**Description**

FIELD OF THE INVENTION:

The invention relates to content-based image retrieval and, more particularly, to improving content-based image retrieval using relevance computation. In an aspect the invention further relates to making predictive hypotheses, especially predictive diagnostic hypotheses, on the basis of image retrieval.

BACKGROUND OF THE INVENTION

Radiologists face an ever-increasing workload resulting from an ever-increasing number of images to be analyzed, classified and/or described. Retrieving images stored in storage of old images, which describe old cases affected by a certain disease, and which are similar to a new image describing a new case on the basis of similarity between the new image and images stored in said storage of old images, may be very helpful in diagnosing the new case. Content-based image retrieval (CBIR) has become an important technique for retrieving images. In this approach, each image is represented by a structure describing image features, e.g. a feature vector. A similarity function (SF) computes the similarity value based, for example, on the length of the difference between the two vectors: the shorter the difference between the two feature vectors, the greater the similarity between the two images.

A drawback of the CBIR methods is described in an article by Rui et al. "Relevance Feedback: A Power Tool for Interactive Content-Based Image Retrieval" (IEEE Transaction on Circuits and System for Video Technology, vol. 6 September 1998, pp. 644-655): such systems tend to be computer-centric because the image feature vector typically comprises low level features which often do not correspond to human perception determined by high level concepts. The solution proposed by Rui et al. is to classify features as useful or not/less useful on the basis of user feedback. To this end the user is asked to rank the images, retrieved on the basis of the similarity of the feature vector, from highly relevant to non-relevant. A feature is considered relevant when the values of this feature in the new image and in retrieved images classified as highly relevant are very similar or if the values of this feature in the new image and in retrieved images classified as non-relevant are very different. Relevant features are then used to redefine the SF for CBIR. This is achieved by assigning higher weights to SF terms corresponding to highly relevant features and lower weights to SF terms corresponding to non-relevant features. While the method of Rui et al. improves the CBIR, it requires interactive ranking of retrieved images by the user. This is inconvenient and may be time-consuming.

Guan et al.: "Bridging the semantic gap using Ranking SVM for image retrieval", IEEE INTERNATIONAL SYMPOSIUM ON BIOMEDICAL IMAGING: FROM NANO TO MACRO, 2009. ISBI '09., USA, 28 June 2009, p. 354-357 relates to bridging the sematic gap using ranking SVM for image retrieval.

US 2007/288432 A1 discloses a system and method of incorporating user preferences in image searches.

Rahman et al.: "A unified image retrieval framework on local visual and semantic concept-based feature spaces", JOURNAL OF VISUAL COMMUNICATION AND IMAGE REPRESENTATION, ACADEMIC PRESS, INC, US, vol. 20, no. 7, 10 June 2009, pages 450-462 relates to a unified image retrieval framework on local visual and semantic concept-based feature spaces.

Muller et al.: "A review of content-based image retrieval systems in medical applications-clinical benefits and future directions", INTERNATIONAL JOURNAL OF MEDICAL INFORMATICS, vol. 73, no. 1, 1 February 2004, pages 1-23 provides a review of content-based image retrieval systems in medical applications.

SUMMARY OF THE INVENTION

It would be advantageous to provide CBIR which does not require interactive ranking of retrieved images by the user.

Thus, in an aspect, the invention provides a system as defined in claim 1. In a further aspect, a corresponding method is provided as defined in claim 8. Preferred embodiments are described in the dependent claims.

The values of the second attribute are stored in and obtained from image storage means. The second attribute is a score of a a test performed on patients which are imaged in part or in whole in the stored images. The scores represent a clinical dementia rating (CDR). The value of the first attribute relating to the query image may be, for example, stored in the query image data (e.g. within an image header), or derived from the query image or from a user input by the relevance unit. These values of the first and second attributes are used by the retrieval unit to compute relevance values (e.g. ranks) of the plurality of images retrieved from image storage means. The user is thus relieved of the task of comparing the retrieved images and evaluating their relevance according to a user-defined criterion. Advantageously, the relevance values computed by the system are less dependent on, or independent of, user subjectivity.

In an embodiment of the system, the similarity function comprises multiple contributions for computing a similarity value, and the update unit is further arranged to select certain contributions of the multiple contributions to be included in the updated similarity function. For example, a feature may be considered relevant when the values of this feature in the new image and in retrieved images classified as highly relevant are similar or if the values of this feature in the new image and in retrieved images classified as non-relevant are quite different.

In an embodiment of the system, values of the second attribute, each value corresponding to an image from image storage means, are stored in image storage means. The values of the second attribute may be obtained based on a user evaluation of the image, a test performed on an object pictured in the image, or computed from the image. Having values of the second attribute readily available in the image storage means allows calculating the relevance of the plurality of images retrieved from the image storage means on the basis of the second attribute without any user interaction. Alternatively, values of the second attribute, e.g. the mean of pixel values or the diameter of the largest circle contained in a model of an object adapted to the object pictured in the image using model-based segmentation, relating to the images of the plurality of images may be computed based on the plurality of images.

In an embodiment of the system, the value of the first attribute is computed on the basis of a user input. The user input may comprise the value of the first attribute, in which case the computation assigns the inputted value to the first attribute value. In a more elaborate case, the user input may comprise a gray value and the first attribute is the percentage of pixels having pixel values greater than the inputted gray value.

The exemplary case that the first attribute is the same as the second may simplify the computation of the relevance of images of the retrieved plurality of images on the basis of a value of a first attribute relating to the query image and values of a second attribute relating to the images of the retrieved plurality of images. If for an image of the plurality of retrieved images a value of the second attribute is similar to the value of the first attribute, the image is assigned a high value of relevance.

Exemplary, the first and second attribute may be a hypothesis that, respectively, the query image and the images from the image storage means satisfy a condition. Thus, the relevance of an image of the retrieved plurality of images may be considered high if the hypothesis relating to the query image and the hypothesis relating to the image of the retrieved plurality of images are both true, i.e. have the same logical value.

In an embodiment of the system, the value of the first attribute is computed on the basis of a user input, and the user input is a probability that the hypothesis is true. The relevance unit is arranged to compute the logical value of the hypothesis, using a statistical test as disclosed in more detail in the description of embodiments.

Exemplary, the hypothesis is a diagnostic hypothesis. The hypothesis may be a diagnostic statement relating to a patient whose body or body part is pictured in the image. The system is thus adapted for retrieving images with similar diagnostic statements. Such diagnostic application of the system of the invention is suitable for helping physicians arrive at a diagnosis.

In the preferred embodiment, the system further comprises a prediction unit for predicting the value of an attribute relating to the query image on the basis of the image retrieved by the retrieval unit using the similarity function updated by the update unit. For example, the diagnostic statement relating to the retrieved image with the highest similarity value may be applied by the prediction unit to the query image. In another application, the diagnostic statement most frequently occurring among a number of the most similar images may be applied to the query image.

In a further aspect, the system according to the invention is comprised in a database system. The database comprises the image storage means with image data. In addition, the database may store other data such as values of the second attribute for some or all images comprised in the database. The system of the invention improves the searching capabilities of the database and expands its functions.

In a further aspect, the system according to the invention is comprised in an image acquisition apparatus.

In a further aspect, the system according to the invention is comprised in a workstation.

In a further aspect, the invention provides a computer program product to be loaded by a computer arrangement, the computer program comprising instructions for retrieving an image from image storage means, the computer arrangement comprising a processing unit and a memory, the computer program product, after being loaded, providing said processing unit with the capability to carry out steps of the method.

It will be appreciated by those skilled in the art that two or more of the above-mentioned embodiments, implementations, and/or aspects of the invention may be combined in any way deemed useful, while falling within the claimed scope.

Modifications and variations of the system, the database system, of the image acquisition apparatus, of the workstation, of the method, and/or of the computer program product, which correspond to the described modifications and variations of the system or the method, can be carried out by a person skilled in the art on the basis of the present description.

A person skilled in the art will appreciate that the method may be applied to multidimensional image data, e.g., 2-dimensional (2-D), 3-dimensional (3-D) or 4-dimensional (4-D) image data, acquired by various acquisition modalities such as, but not limited to, X-ray Imaging, Computed Tomography (CT), Magnetic Resonance Imaging (MRI), Ultrasound (US), Positron Emission Tomography (PET), Single Photon Emission Computed Tomography (SPECT), and Nuclear Medicine (NM).

The invention is defined by the independent claims. Advantageous embodiments are defined in the dependent claims.

BRIEF DESCRIPTION OF THE DRAWINGS

These and other aspects of the invention will become apparent from and will be elucidated with respect to the implementations and embodiments described hereinafter and with reference to the accompanying drawings, wherein:

Fig. 1 shows a block diagram of an exemplary embodiment of the system;

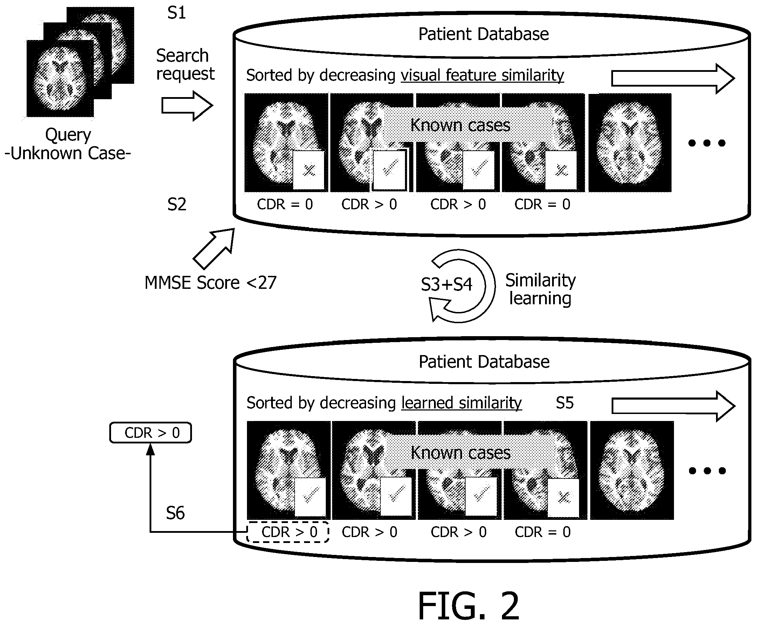

Fig. 2 shows a schematic description of a diagnostic protocol according to the invention;

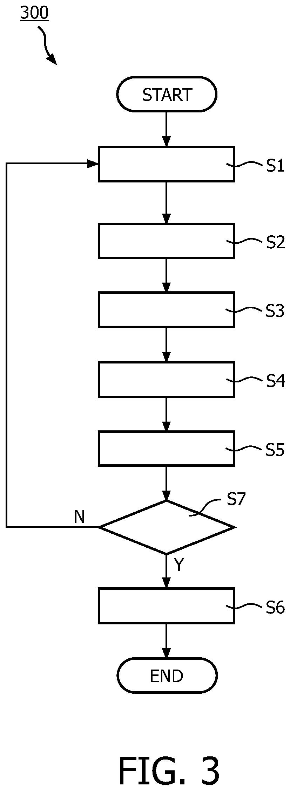

Fig. 3 shows a flowchart of exemplary implementations of the method;
Fig. 4 schematically shows an exemplary embodiment of the database system; and
Fig. 5 schematically shows an exemplary embodiment of the image acquisition apparatus; and
Fig. 6 schematically shows an exemplary embodiment of the workstation.

Identical reference numerals are used to denote similar parts throughout the Figures.

DETAILED DESCRIPTION OF EMBODIMENTS

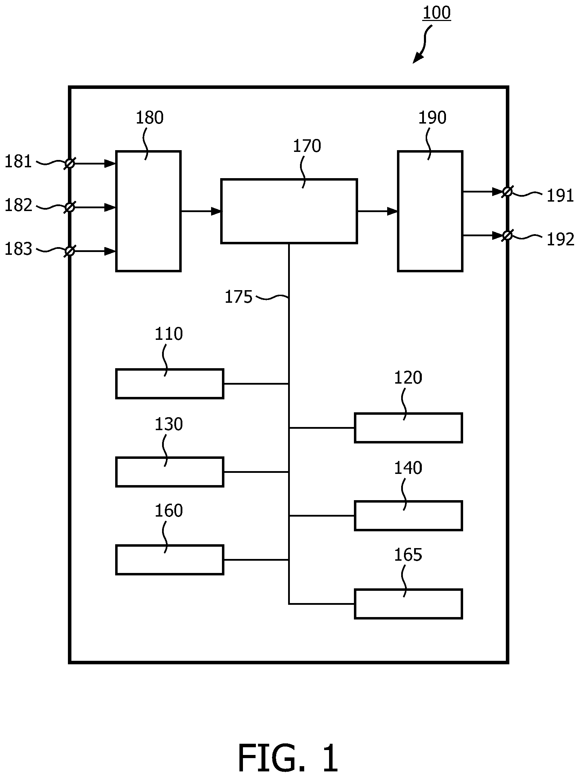

Fig. 1 schematically shows a block diagram of an exemplary embodiment of the system 100 for retrieving an image from image storage means, the system comprising

- a retrieval unit 110 for retrieving a plurality of images from image storage means, on the basis of similarity of images from said image storage means to a query image, wherein the similarity is defined by a similarity function;
- a relevance unit 120 for computing values of relevance of images of the retrieved plurality of images on the basis of a value of a first attribute relating to the query image and values of a second attribute relating to the images of the retrieved plurality of images; and
- an update unit 130 for updating the similarity function on the basis of the computed values of relevance;

and wherein the retrieval unit (110) is further adapted for retrieving the image from image storage means, based on the updated similarity function.

The exemplary embodiment of the system 100 further comprises a prediction unit 140 for predicting the value of an attribute relating to the query image, on the basis of the image retrieved by the retrieval unit 110, using the similarity function updated by the update unit 130;

- a control unit 160 for controlling the work of the system 100;
- a user interface 165 for communication between the user and the system 100; and
- a memory unit 170 for storing data.

In an embodiment of the system 100, there are three input connectors 181, 182 and 183 for the incoming data. The first input connector 181 is arranged to receive data coming in from a data storage means such as, but not limited to, a hard disk, a magnetic tape, a flash memory, or an optical disk. The second input connector 182 is arranged to receive data coming in from a user input device such as, but not limited to, a mouse or a touch screen. The third input connector 183 is arranged to receive data coming in from a user input device such as a keyboard. The input connectors 181, 182 and 183 are connected to an input control unit 180.

In an embodiment of the system 100, there are two output connectors 191 and 192 for the outgoing data. The first output connector 191 is arranged to output the data to a data storage means such as a hard disk, a magnetic tape, a flash memory, or an optical disk. The second output connector 192 is arranged to output the data to a display device. The output connectors 191 and 192 receive the respective data via an output control unit 190.

A person skilled in the art will understand that there are many ways to connect input devices to the input connectors 181, 182 and 183 and the output devices to the output connectors 191 and 192 of the system 100. These ways comprise, but are not limited to, a wired and a wireless connection, a digital network such as, but not limited to, a Local Area Network (LAN) and a Wide Area Network (WAN), the Internet, a digital telephone network, and an analog telephone network.

In an embodiment of the system 100, the system 100 comprises a memory unit 170. The system 100 is arranged to receive input data from external devices via any of the input connectors 181, 182, and 183 and to store the received input data in the memory unit 170. Loading the input data into the memory unit 170 allows quick access to relevant data portions by the units of the system 100. The input data comprises the query image. Optionally, the input data comprises image data from image storage means. Alternatively, image storage means may be implemented by the memory 170. Further, the input data may comprise a user input and/or values of the second attribute of images comprised in image storage means. The memory unit 170 may be implemented by devices such as, but not limited to, a register file of a CPU, a cache memory, a Random Access Memory (RAM) chip, a Read Only Memory (ROM) chip, and/or a hard disk drive and a hard disk. The memory unit 170 may be further arranged to store the output data. The output data comprises the image retrieved by the retrieval unit 110. The output data may also comprise, for example, useful information about the updated similarity function and the predicted value of an attribute relating to the query image. The memory unit 170 may be also arranged to receive data from and/or deliver data to the units of the system 100 comprising the retrieval unit 110, the relevance unit 120, the update unit 130, the prediction unit 140, the control unit 160, and the user interface 165, via a memory bus 175. The memory unit 170 is further arranged to make the output data available to external devices via any of the output connectors 191 and 192. Storing data from the units of the system 100 in the memory unit 170 may advantageously improve performance of the units of the system 100 as well as the rate of transfer of the output data from the units of the system 100 to external devices.

In an embodiment of the system 100, the system 100 comprises a control unit 160 for controlling the system 100. The control unit may be arranged to receive control data from and provide control data to the units of the system 100. For example, after updating the similarity function, the update unit 130 may be arranged to provide control data "the similarity function is updated" to the control unit 160 and the control unit 160 may be arranged to provide control data "retrieve the image" to the retrieval unit 110. Alternatively, a control function may be implemented in another unit of the system 100.

In an embodiment of the system 100, the system 100 comprises a user interface 165 for communication between a user and the system 100. The user interface 165 may be arranged to receive a user input for downloading a query image into the memory 170 or for computing the value of the first attribute. The user interface may further provide means for displaying the plurality of images retrieved by the retrieval unit 110. Optionally, the user interface may receive a user input for selecting a mode of operation of the system such as, e.g., for a method of updating the similarity function. A person skilled in the art will understand that more functions may be advantageously implemented in the user interface 165 of the system 100.

In the preferred embodiment, the system 100 of the invention is adapted for predicting elaborate cognitive test scores from basic test scores. The used mini-mental state examination (MMSE) is a brief commonly used questionnaire, where a score over 27 (out of 30) is effectively considered as normal, while lower scores increasingly correlate with presence of dementia. While this test can be completed in just five minutes, it has been observed that putting a simple threshold at 27 (out of 30) usually falls short in detecting the presence of dementia. The clinical dementia rating (CDR), on the other hand, is a much more elaborate, but also time-consuming test, credited with being able to discern even mild levels of dementia with great accuracy. A CDR score of 0 indicates no dementia, while higher scores show dementia of increasing severity. Each image of the database is assigned a CDR.

The claimed approach is based on first retrieving past cases that are visually similar to an unknown new case, then labeling a few of them as relevant or irrelevant using simple test scores, and finally automatically learning a novel adaptive similarity measure that can more accurately probe the absence or presence of a certain condition. The protocol proposed in this invention is illustrated in Fig. 1 and consists of the following steps:

(S1) The user enters the new case (query image) to the system 100; the retrieval unit 110 returns a ranked list of past cases (database images) based on visual similarity (e.g., measured as the affinity between intensity histograms of MR images).

(S2-1) A hypothesis on the query is automatically generated based on the MMSE score of the new case, which may be included in the header of the query image data or may be inputted by the user, for example.

(S3-1) Relevance values (e.g. Boolean values TRUE or FALSE) based on relevance relations between the query image and as many database images as one wants are computed by the relevance unit 120 using the formula: relevance = (MMSE<27) AND (CDR>0). The number $M$ of database images for which the relevance is computed can be specified by the user or can be fixed based on performance benchmarking.

(S4) Previous steps output (relevance values for each of the $M$ database images) is used by the update unit 130 as a training set; it consist of $M$ images; based on this set, the similarity function is updated using machine learning.

(S5) Using this updated similarity function, the retrieval unit 110 returns a new list of database images ranked according to the values of the updated similarity function.

(S6-1) Finally, the CDR score relating to the query predicted by the prediction unit 140 is the CDR score of the top image of the ranked list retrieved in step S5.

In another embodiment, the system 100 of the invention is adapted for assisting a physician in diagnosing mental disorders, using image similarity and uncertain user hypothesis. Each image of the database is assigned a diagnosis. The steps of the algorithm are:

(S1) The user enters the new case (query image) to the system 100; the retrieval unit 110 returns a ranked list of past cases (database images) based on visual similarity (e.g., measured as the affinity between intensity histograms of MR images).

(S2-2) The user provides a diagnostic hypothesis on the query image and/or an associated confidence statement (the latter could be done via verbal statements or via adjusting a slider on the user interface, for example).

(S3-2) The diagnostic hypothesis is tested based on the confidence statement, e.g. a probability p that the diagnostic hypothesis is true. For example, a random number r is generated using a generator of random numbers uniformly distributed on the interval [0, 1]. If $r \leq p$ then the test outcome is TRUE (i.e. the diagnostic hypothesis is true); otherwise the outcome is FALSE (i.e. the diagnostic hypothesis is false). Relevance values (e.g. Boolean values TRUE or FALSE), based on the outcome of the diagnostic hypothesis testing and on whether (hypothesis <= diagnosis) for each of the M retrieved images, are computed according to the formula: relevance = (test outcome) AND (hypothesis <= diagnosis). The number M can be specified by the user or can be determined based on performance benchmarking.

(S4) Previous steps output (relevance values for each of the $M$ database images) is used by the update unit 130 as a training set; it consist of $M$ images; based on this set, the similarity function is updated using machine learning.

(S5) Using this updated similarity function, the retrieval unit 110 returns a new list of database images ranked according to the values of the updated similarity function.

(S6-2) Finally, the diagnosis relating to the query predicted by the prediction unit 140 is the diagnosis relating to the top image of the ranked list retrieved in step S5.

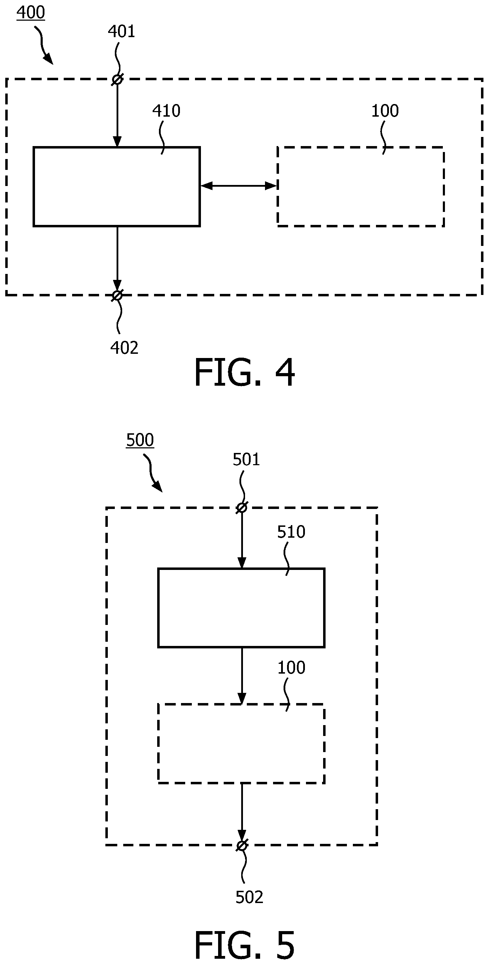

A flowchart of both exemplary implementations of the method M of retrieving an image from image storage means is schematically shown in Fig. 5. A person skilled in the art may change the order of some steps or perform some steps concurrently using threading models, multi-processor systems or multiple processes without departing from the concept as intended by the present invention. Optionally, two or more steps of the method M may be combined into one step. Optionally, a step of the method M may be split into a plurality of steps. Optionally, the method M may further comprise an iteration step S7 for checking a condition. The condition may be based on a user input. If the condition is satisfied, the method M is arranged for repeating steps S1 to S5 to further update the similarity function. If the condition is not satisfied, the method M continues to the last step S6 and then terminates.

A person skilled in the art will understand that "image" typically refers to a 2D or 3D image.

In an embodiment, the similarity function is determined in step S4 by the update unit 130 in the following manner. Let $q = (q_k) \in R^K$ denote a $K$-dimensional image feature vector of the query and let

$$x^m = \left(x_k^m\right) \in R^K, \; m = 1,2,...,M$$ denote an image feature vector of the m-th image from the plurality of images retrieved by the retrieval unit 110 in step S1. The contribution of the $k$-th image feature has a weight $w_k$ of a weight vector $w$. The similarity function for computing the similarity of the retrieved image described by the feature vector $x$ to the query image described by the feature vector $q$ may be defined as

$$S(q,x) = \sum_{k=1}^{K} w_k \, exp(-|q_k - x_k|)$$

A person skilled in the art will know many ways of computing values $w_k$ based on the feature vectors $x^m$ corresponding to the plurality of images retrieved by the retrieval unit 110 and the relevance values $y^m$ computed by the relevance unit 120. Any suitable method can be implemented in the update step S4 and employed by the update unit 130. For example, the weights can be computed using Rui's method described in the aforementioned paper by Rui et al., or using machine learning. Suitable machine-learning methods are described, for example, in Chapter 3 of C. B. Akgul's work entitled "Density-based shape descriptors and similarity learning for 3D object retrieval", PhD Thesis, Telecom ParisTech and Bogazici University, 2007. Further, the references cited in this work may be helpful to understand the statistical learning of similarity described in said Chapter 3. A person skilled in the art will understand that the scope of the claims is not limited by the definition of the similarity function or by the method employed for updating the similarity function parameters such as the weights $w_k$ in the exemplary embodiment described above.

A person skilled in the art will appreciate that the system 100 may be a valuable tool for assisting a physician in many aspects of her/his job. Further, although the embodiments of the system are illustrated using medical applications of the system, non-medical applications of the system are also contemplated.

Those skilled in the art will further understand that other embodiments of the system 100 are also possible. It is possible, among other things, to redefine the units of the system and to redistribute their functions. Although the described embodiments apply to medical images, other applications of the system, not related to medical applications, are also possible.

The units of the system 100 may be implemented using a processor. Normally, their functions are performed under the control of a software program product. During execution, the software program product is normally loaded into a memory, like a RAM, and executed from there. The program may be loaded from a background memory, such as a ROM, hard disk, or magnetic and/or optical storage, or may be loaded via a network like the Internet. Optionally, an application-specific integrated circuit may provide the described functionality.

Fig. 4 schematically shows an exemplary embodiment of the database system 400 employing the system 100 of the invention, said database system 400 comprising a database unit 410 connected via an internal connection to the system 100, an external input connector 401, and an external output connector 402. This arrangement advantageously increases the capabilities of the database system 400, providing said database system 400 with advantageous capabilities of the system 100.

Fig. 5 schematically shows an exemplary embodiment of the image acquisition apparatus 500 employing the system 100 of the invention, said image acquisition apparatus 500 comprising an image acquisition unit 510 connected via an internal connection with the system 100, an input connector 501, and an output connector 502. This arrangement advantageously increases the capabilities of the image acquisition apparatus 500, providing said image acquisition apparatus 500 with advantageous capabilities of the system 100.

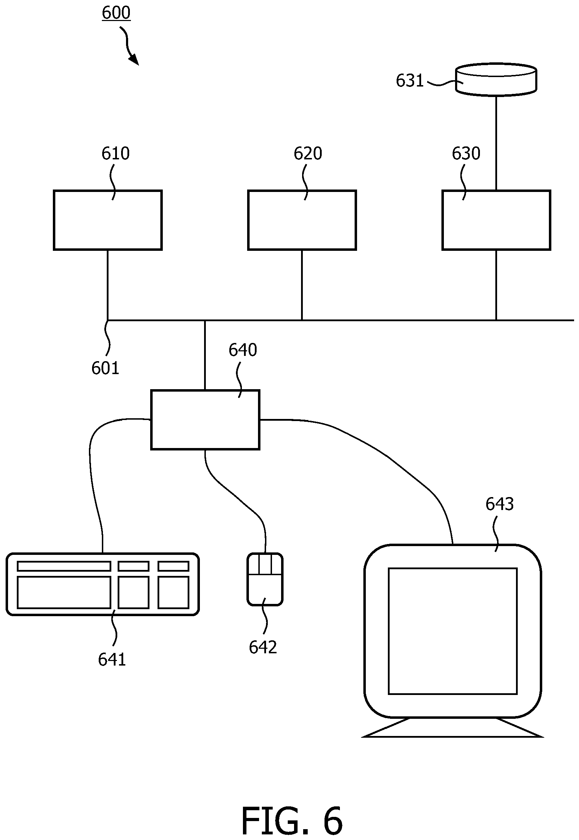

Fig. 6 schematically shows an exemplary embodiment of the workstation 600. The workstation comprises a system bus 601. A processor 610, a memory 620, a disk input/output (I/O) adapter 630, and a user interface (UI) 640 are operatively connected to the system bus 601. A disk storage device 631 is operatively coupled to the disk I/O adapter 630. A keyboard 641, a mouse 642, and a display 643 are operatively coupled to the UI 640. The system 100 of the invention, implemented as a computer program, is stored in the disk storage device 631. The workstation 600 is arranged to load the program and input data into memory 620 and execute the program on the processor 610. The user can input information to the workstation 600, using the keyboard 641 and/or the mouse 642. The workstation is arranged to output information to the display device 643 and/or to the disk 631. A person skilled in the art will understand that there are numerous other embodiments of the workstation 600 known in the art and that the present embodiment serves the purpose of illustrating the invention and must not be interpreted as limiting the invention to this particular embodiment.

It should be noted that the above-mentioned embodiments illustrate rather than limit the invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim or in the description. The invention can be implemented by means of hardware comprising several distinct elements and by means of a programmed computer. In the system claims enumerating several units, several of these units can be embodied by one and the same record of hardware or software.

**Claims**

1. A system (100) for predicting elaborate cognitive test scores from basic test scores, the system comprising

   - a retrieval unit (110) for retrieving a first ranked list of images from image storage means comprising images of a body or body parts of a patient, on the basis of visual similarity of images from said image storage means to a query image, wherein the similarity is defined by a similarity function;
   - means for providing a value of a first attribute relating to the query image, wherein said first attribute is a mini-mental state examination (MMSE) score;
   - a relevance unit (120) for computing Boolean values of relevance of images of the retrieved first ranked list of images on the basis of the value of the MMSE score relating to the query image and values of a second attribute relating to the images of the retrieved first ranked list of images, wherein said second attribute is a clinical dementia rating (CDR) score; wherein said values of relevance are computed using the formula: relevance value = (MMSE<27) AND (CDR>0);
   - an update unit (130) for updating the similarity function on the basis of the images of the first ranked list and its computed Boolean values of relevance using machine learning;

   wherein the retrieval unit (110) is further adapted for retrieving a second ranked list of images from image storage means, based on the updated similarity function; and
   wherein the system further comprises a prediction unit (140) adapted for predicting a value of a CDR score relating to the query image by setting the CDR score of the query image to the value of the CDR score of the top image of the second ranked list retrieved by the retrieval unit (110), using the similarity function updated by the update unit (130).

2. A system (100) as claimed in claim 1, wherein the similarity function comprises multiple contributions for computing a similarity value, and wherein the update unit (130) is further arranged to select certain contributions of the multiple contributions to be included in the updated similarity function.

3. A system (100) as claimed in claim 1 or 2, wherein values of the second attribute, each value corresponding to an image from image storage means, are stored in said image storage means.

4. A system (100) as claimed in any one of claims 1 to 3, wherein the value of the first attribute relating to the query image is computed on the basis of a user input.

5. A database system (400) comprising a system (100) as claimed in any one of the preceding claims.

6. An image acquisition apparatus (500) comprising a system (100) as claimed in any one of the preceding claims.

7. A workstation (600) comprising a system (100) as claimed in any one of the preceding claims.

8. A method of predicting elaborate test scores from basic test scores, the method comprising

- a retrieval step (S1) for retrieving a first ranked list of images from image storage means comprising images of a body or body part of a patient, on the basis of visual similarity of images from said image storage means to a query image, wherein the similarity is defined by a similarity function;
- an attribute value provision step (S2) for providing a value of a first attribute of the query image, wherein said first attribute is a mini-mental state examination (MMSE) score;
- a relevance step (S3) for computing values of relevance of images of the retrieved first ranked list of images on the basis of the value of the MMSE score of the query image and values of a second attribute of the images of the retrieved first ranked list of images, wherein said second attribute is a clinical dementia rating (CDR) score; wherein said values of relevance are computed using the formula: relevance value (MMSE<27) AND (CDR>0);
- an update step (S4) for updating the similarity function on the basis of the images of the first ranked list and its computed values of relevance using machine learning;
- a further retrieval step (S5) for retrieving a second ranked list of images from image storage means, based on the updated similarity function; and
- a prediction step (S6) for predicting a value of a CDR score relating to the query list image by setting the value of the CDR score of the top image of the second ranked list retrieved at the further retrieval step (S5), using the similarity function updated at the update step (S4).

9. A computer program product to be loaded by a computer arrangement, comprising instructions for retrieving an image from image storage means, the computer arrangement comprising a processing unit and a memory, the computer program product, after being loaded, providing said processing unit with the capability to carry out steps of a method as claimed in claim 8.

**Patentansprüche**

1. System (100) zur Vorhersage ausführlicher kognitiver Testergebnisse anhand von Basistestergebnissen, wobei das System Folgendes umfasst:

- eine Abrufeinheit (110) zum Abrufen einer erstrangigen Liste von Bildern aus Bildspeichermitteln umfassend Bilder vom Körper oder von Körperteilen eines Patienten auf der Basis der visuellen Ähnlichkeit von Bildern aus den genannten Bildspeichermitteln mit einem Abfragebild, wobei die Ähnlichkeit durch eine Ähnlichkeitsfunktion definiert ist;
- Mittel zum Bereitstellen eines Werts eines ersten Attributs, das sich auf das Abfragebild bezieht, wobei das genannte erste Attribut eine Punktzahl eines Mini-Mental-Status-Tests (MMST) ist;
- eine Relevanzeinheit (120) zum Berechnen von Boolschen Werten der Relevanz von Bildern der abgerufenen erstrangigen Liste von Bildern auf der Basis der MMST-Punktzahl in Bezug auf das Abfragebild und Werten eines zweiten Attributs, das sich auf Bilder der abgerufenen erstrangigen Liste von Bildern bezieht, wobei das genannte zweite Attribut eine Punktzahl der klinischen Demenzbewertung (clinical dementia rating, CDR) ist; wobei die genannten Relevanzwerte unter Verwendung der folgenden Formel berechnet werden: Relevanzwert = (MMST<27) UND (CDR>0);
- eine Aktualisierungseinheit (130) zum Aktualisieren der Ähnlichkeitsfunktion auf der Basis der Bilder der erstrangigen Liste und ihrer berechneten Boolschen Werte der Relevanz unter Verwendung von Maschinenlernen;

wobei die Abrufeinheit (110) ferner dafür ausgelegt ist, eine zweitrangige Liste von Bildern aus Bildspeichermitteln basierend auf der aktualisierten Ähnlichkeitsfunktion abzurufen; und

wobei das System ferner eine Vorhersageeinheit (140) umfasst, die dafür ausgelegt ist, einen Wert einer CDR-Punktzahl in Bezug auf das Abfragebild vorherzusagen, indem die CDR-Punktzahl des Abfragebilds auf den Wert der CDR-Punktzahl des obersten Bilds der zweitrangigen Liste eingestellt wird, die durch die Abrufeinheit (110) unter Verwendung der durch die Aktualisierungseinheit (130) aktualisierten Ähnlichkeitsfunktion abgerufen wurde.

2. System (100) nach Anspruch 1, wobei die Ähnlichkeitsfunktion mehrere Beiträge zur Berechnung eines Ähnlichkeitswerts umfasst, und wobei die Aktualisierungseinheit (130) ferner dafür ausgelegt ist, bestimmte Beiträge von den mehreren Beiträgen zur Einbeziehung in die aktualisierte Ähnlichkeitsfunktion auszuwählen.

3. System (100) nach Anspruch 1 oder 2, wobei Werte des zweiten Attributs in den genannten Bildspeichermitteln gespeichert werden, wobei jeder Wert einem Bild aus Bildspeichermitteln entspricht.

4. System (100) nach einem der Ansprüche 1 bis 3, wobei der Wert des ersten Attributs, das sich auf das Abfragebild bezieht, auf der Basis einer Benutzereingabe berechnet wird.

**5.** Datenbanksystem (400) umfassend ein System (100) nach einem der vorhergehenden Ansprüche.

**6.** Bilderfassungsgerät (500) umfassend ein System (100) nach einem der vorhergehenden Ansprüche.

**7.** Workstation (600) umfassend ein System (100) nach einem der vorhergehenden Ansprüche.

**8.** Verfahren zur Vorhersage ausführlicher kognitiver Testergebnisse anhand von Basistestergebnissen, wobei das Verfahren Folgendes umfasst:

- einen Abrufschritt (S1) zum Abrufen einer erstrangigen Liste von Bildern aus Bildspeichermitteln umfassend Bilder vom Körper oder von Körperteilen eines Patienten auf der Basis der visuellen Ähnlichkeit von Bildern aus den genannten Bildspeichermitteln mit einem Abfragebild, wobei die Ähnlichkeit durch eine Ähnlichkeitsfunktion definiert ist;
- einen Attributwertbereitstellungsschritt (S2) zum Bereitstellen eines Werts eines ersten Attributs des Abfragebilds, wobei das genannte erste Attribut eine Punktzahl eines Mini-Mental-Status-Tests (MMST) ist;
- einen Relevanzschritt (S3) zum Berechnen von Relevanzwerten von Bildern der abgerufenen erstrangigen Liste von Bildern auf der Basis der MMST-Punktzahl des Abfragebilds und Werten eines zweiten Attributs der Bilder der abgerufenen erstrangigen Liste von Bildern, wobei das genannte zweite Attribut eine Punktzahl der klinischen Demenzbewertung (clinical dementia rating, CDR) ist; wobei die genannten Relevanzwerte unter Verwendung der folgenden Formel berechnet werden: Relevanzwert = (MMST<27) UND (CDR>0);
- einen Aktualisierungsschritt (S4) zum Aktualisieren der Ähnlichkeitsfunktion auf der Basis der Bilder der erstrangigen Liste und ihrer berechneten Relevanzwerte unter Verwendung von Maschinenlernen;
- einen weiteren Abrufschritt (S5) zum Abrufen einer zweitrangigen Liste von Bildern aus Bildspeichermitteln basierend auf der aktualisierten Ähnlichkeitsfunktion; und
- einen Vorhersageschritt (S6) zum Vorhersagen eines Werts einer CDR-Punktzahl in Bezug auf das Abfragelistenbild, indem der Wert der CDR-Punktzahl des obersten Bilds der zweitrangigen Liste eingestellt wird, die bei dem weiteren Abrufschritt (S5) unter Verwendung der in dem Aktualisierungsschritt (S4) aktualisierten Ähnlichkeitsfunktion abgerufen wurde.

**9.** Computerprogrammprodukt, das durch eine Computeranordnung zu laden ist und Anweisungen zum Abrufen eines Bilds aus dem Bildspeichermittel umfasst, wobei die Computeranordnung eine Verarbeitungseinheit und einen Speicher umfasst, wobei das Computerprogrammprodukt, nachdem es geladen wurde, der genannten Verarbeitungseinheit die Fähigkeit verleiht, Schritte eines Verfahrens nach Anspruch 8 durchzuführen.

**Revendications**

**1.** Système (100) pour prédire des scores de tests cognitifs élaborés à partir de scores de tests basiques, le système comprenant

- une unité de récupération (110) pour récupérer une première liste classée d'images à partir d'un moyen de stockage d'images comprenant des images d'un corps ou de parties corporelles d'un patient, sur la base d'une similarité visuelle d'images provenant dudit moyen de stockage d'images avec une image d'interrogation, dans lequel la similarité est définie par une fonction de similarité ;
- un moyen pour fournir une valeur d'un premier attribut relatif à l'image d'interrogation, dans lequel ledit premier attribut est un score de mini-examen d'état mental (MMSE) ;
- une unité de pertinence (120) pour calculer des valeurs booléennes de pertinence d'images de la première liste classée d'images récupérée sur la base de la valeur du score MMSE relatif à l'image d'interrogation et des valeurs d'un second attribut relatif aux images de la première liste classée d'images récupérée, dans lequel ledit second attribut est un score d'évaluation clinique de démence (CDR) ; dans lequel lesdites valeurs de pertinence sont calculées en utilisant la formule : valeur de pertinence = (MMSE < 27) ET (CDR > 0) ;
- une unité d'actualisation (130) pour actualiser la fonction de similarité sur la base des images de la première liste classée et de ses valeurs booléennes de pertinence calculées en utilisant un apprentissage par machine ;

dans lequel l'unité de récupération (110) est adaptée en outre pour récupérer une seconde liste classée d'images à partir d'un moyen de stockage d'images, sur la base de la fonction de similarité actualisée ; et dans lequel le système comprend en outre une unité de prédiction (140) adaptée pour prédire une valeur d'un score CDR relatif à l'image d'interrogation en fixant le score CDR de l'image d'interrogation à la valeur du score CDR de l'image supérieure de la seconde liste classée récupérée par l'unité de récupération (110), en utilisant la fonction de similarité actualisée par l'unité d'actualisation (130).

2. Système (100) selon la revendication 1, dans lequel la fonction de similarité comprend de multiples contributions pour calculer une valeur de similarité, et dans lequel l'unité d'actualisation (130) est agencée en outre pour sélectionner certaines contributions des multiples contributions à inclure dans la fonction de similarité actualisée.

3. Système (100) selon la revendication 1 ou 2, dans lequel les valeurs du second attribut, chaque valeur correspondant à une image provenant d'un moyen de stockage d'images, sont stockées dans ledit moyen de stockage d'images.

4. Système (100) selon l'une quelconque des revendications 1 à 3, dans lequel la valeur du premier attribut relatif à l'image d'interrogation est calculée sur la base d'une entrée utilisateur.

5. Système de base de données (400) comprenant un système (100) selon l'une quelconque des revendications précédentes.

6. Appareil d'acquisition d'images (500) comprenant un système (100) selon l'une quelconque des revendications précédentes.

7. Station de travail (600) comprenant un système (100) selon l'une quelconque des revendications précédentes.

8. Procédé de prédiction de scores de tests élaborés à partir de scores de tests basiques, le procédé comprenant

   - une étape de récupération (S1) pour récupérer une première liste classée d'images à partir d'un moyen de stockage d'images comprenant des images d'un corps ou de parties corporelles d'un patient, sur la base d'une similarité visuelle d'images provenant dudit moyen de stockage d'images avec une image d'interrogation, dans lequel la similarité est définie par une fonction de similarité ;
   - une étape de fourniture de valeur d'attribut (S2) pour fournir une valeur d'un premier attribut de l'image d'interrogation, dans lequel ledit premier attribut est un score de mini-examen d'état mental (MMSE) ;
   - une étape de pertinence (S3) pour calculer des valeurs de pertinence d'images de la première liste classée d'images récupérée sur la base de la valeur du score MMSE de l'image d'interrogation et des valeurs d'un second attribut des images de la première liste classée d'images récupérée, dans lequel ledit second attribut est un score d'évaluation clinique de démence (CDR) ; dans lequel lesdites valeurs de pertinence sont calculées en utilisant la formule : valeur de pertinence (MMSE < 27) ET (CDR > 0) ;
   - une étape d'actualisation (S4) pour actualiser la fonction de similarité sur la base des images de la première liste classée et de ses valeurs calculées de pertinence en utilisant un apprentissage par machine ;
   - l'étape de récupération (S5) supplémentaire pour récupérer une seconde liste classée d'images à partir d'un moyen de stockage d'images, sur la base de la fonction de similarité actualisée ; et
   - une étape de prédiction (S6) pour prédire une valeur d'un score CDR relatif à l'image de liste d'interrogation en fixant la valeur du score CDR de l'image supérieure de la seconde liste classée récupérée dans l'étape de récupération (S5) supplémentaire, en utilisant la fonction de similarité actualisée dans l'étape d'actualisation (S4).

9. Produit de programme informatique à charger par un agencement informatique, comprenant des instructions pour récupérer une image à partir d'un moyen de stockage d'images, l'agencement informatique comprenant une unité de traitement et une mémoire, le produit de programme informatique, après avoir été chargé, fournissant à ladite unité de traitement la capacité de mettre en oeuvre des étapes d'un procédé selon la revendication 8.

FIG. 1

FIG. 2

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007288432 A1

**Non-patent literature cited in the description**

- **RUI et al.** Relevance Feedback: A Power Tool for Interactive Content-Based Image Retrieval. *IEEE Transaction on Circuits and System for Video Technology,* September 1998, vol. 6, 644-655
- **GUAN et al.** Bridging the semantic gap using Ranking SVM for image retrieval. *IEEE INTERNATIONAL SYMPOSIUM ON BIOMEDICAL IMAGING: FROM NANO TO MACRO, 2009. ISBI '09,* 28 June 2009, 354-357
- A unified image retrieval framework on local visual and semantic concept-based feature spaces. **RAHMAN et al.** JOURNAL OF VISUAL COMMUNICATION AND IMAGE REPRESENTATION. ACADEMIC PRESS, INC, 10 June 2009, vol. 20, 450-462
- **MULLER et al.** A review of content-based image retrieval systems in medical applications-clinical benefits and future directions. *INTERNATIONAL JOURNAL OF MEDICAL INFORMATICS,* 01 February 2004, vol. 73 (1), 1-23
- Density-based shape descriptors and similarity learning for 3D object retrieval. PhD Thesis. Telecom ParisTech and Bogazici University, 2007